# EUROPEAN PATENT APPLICATION

(11) **EP 4 465 570 A1**
(43) Date of publication of application: **20.11.2024**
(21) Application number: 22917952.8
(22) Date of filing: 10.01.2022
(51) Int. Cl.: H04L 5/00, H04W 72/04

(54) **REFERENCE SIGNAL AVAILABILITY INDICATION METHOD AND APPARATUS, NETWORK ELEMENT DEVICE, TERMINAL AND STORAGE MEDIUM**

(71) Applicant: Beijing Xiaomi Mobile Software Co., Ltd., Beijing 100085 (CN)
(72) Inventor: LI, Yanhua, Beijing 100085 (CN); FU, Ting, Beijing 100085 (CN)
(74) Representative: Dehns Germany Partnerschaft mbB
(86) International application number: PCT/CN2022/071146
(87) International publication number: WO 2023/130482

(57) **Abstract**

The present invention relates to a reference signal availability indication method and apparatus, a network device, a UE and a storage medium. The method comprises: a terminal in a first state receives first indication information sent by a network side, the first indication information comprising availability state information of a reference signal. The present invention effectively supplements the use of availability information of a reference signal, so that the network access of a terminal is convenient.

## Description

### TECHNICAL FIELD

The present invention relates to a method for indicating an availability of a reference signal, an apparatus for indicating an availability of a reference signal, a network element device, a user equipment (UE) and a storage medium.

### BACKGROUND

In the current 3GPP standardization of the R17 power saving project, it is proposed to use an additional timing reference signal (TRS)/channel tate information reference signal (CSI-RS) in an idle status to assist a UE in realizing time and frequency domain synchronization with a network. As compared to the original synchronization signal and PBCH block (SSB) synchronization, the TRS/CSI-RS configuration can be configured closer to a paging occasion (PO) moment, while the original SSB is further away from the PO position, so the UE needs to wake up a long time in advance of synchronizing with the SSB. With the additional TRS/CSI-RS, the UE can wake up later, thus saving power.

It is currently believed that additional TRS/CSI-RS configuration information and status information of whether it is being broadcast will be broadcast in a system message. The TRS/CSI-RS configuration information (also referred to as the configuration information of TRS/CSI-RS) can be considered to be indicated separately from the availability status. In other words, the network is likely to be configured with TRS/CSI-RS, but no actual transmission is performed, i.e. it is not available to UEs in an idle status. According to the latest meeting report, this is determined by the implementation of the base station. According to the latest meeting report, the TRS/CSI-RS configuration information is placed in a system information block TypeX (SIB-X).

Currently, the status information of whether TRS/CSI-RS is being broadcast needs to be conveyed to UEs in a non-connected status, because UEs need to decide how to synchronize with the network based on the valid TRS/CSI-RS information. If the two pieces of information are inconsistent, bigger problems will occur. For example, if the network is sending valid TRS/CSI-RS information, but the UE believes that there is no such information, the UE will use the original SSB synchronization manner, which will cause greater power consumption. On the contrary, if the network stops sending valid TRS/CSI-RS information, and the UE still performs synchronization according to the original understanding, then the synchronization accuracy will decrease. Therefore, the availability indication of TRS/CSI-RS also needs to be explicitly conveyed to the UE. Currently, the UE is notified of its availability indication through layer one (Lay1) signaling, which may be a permanent equipment identifier (PEI) or paging downlink control information (DCI). The network will also indicate the validity duration (such as several default discontinuous reception (DRX) cycles) of the availability of a TRS/CSI-RS resource set, whose valid starting time, i.e., valid reference point, is at a first paging frame of a default DRX cycle in which a current UE receives the availability indication.

After the network indicates the availability of the TRS/CSI-RS resource set, the network generally does not send an availability change for the TRS/CSI-RS resource set again. However, the configuration of the network usually changes dynamically. For example, if the UE providing the TRS/CSI-RS resource set is switched, the configuration of the TRS/CSI-RS may be changed. However, there is no technical solution available for reference on how the UE can consistently handle configuration changes and availability changes.

### SUMMARY

In view of this, embodiments of the present invention provide an availability of a reference signal, an apparatus for indicating an availability of a reference signal, a network element device, a user equipment (UE) and a storage medium.

According to a first aspect of the present invention, there is provided a method for indicating an availability of a reference signal, including: receiving, by a user equipment in a first status, first indication information sent by a network side, the first indication information including availability status information of the reference signal.

In some illustrative embodiments, the availability status information includes availability or unavailability information of the reference signal.

In some illustrative embodiments, the availability status includes availability change information of the reference signal; and the availability change information includes a change of the reference signal from available to unavailable, or a change of the reference signal from unavailable to available.

In some illustrative embodiments, the method further includes: receiving, by the user equipment, system information or change indication information of system information sent by the network side, acquiring configuration information of the reference signal based on the system information; and monitoring the reference signal changed according to a default availability status.

In some illustrative embodiments, monitoring the reference signal changed according to the default availability status includes: determining, by the user equipment, at least one reference signal changed based on the configuration information of the reference signal; and confirming, by the user equipment, that an availability status of the at least one reference signal changed is unavailable.

In some illustrative embodiments, the method further includes: receiving, by the user equipment, system information or change indication information of system information sent by the network side, acquiring configuration information of the reference signal based on the system information; and determining, as an availability status of the reference signal, an availability status before the configuration information of the reference signal is changed.

In some illustrative embodiments, the method further includes: receiving, by the user equipment, the first indication information, and system information or change indication information of system information simultaneously; and monitoring the reference signal based on configuration information and the availability status information of the reference signal.

In some illustrative embodiments, the first indication information, and the system information or the change indication information of the system information are received by the user equipment in a same message; or the first indication information, and the system information or the change indication information of the system information are received by the user equipment in different messages.

In some illustrative embodiments, the system information or the change indication information of the system information and the availability status information are received by the user equipment in a same system message modification cycle; and it is determined that the system information or the change indication information of the system information and the availability status information are received simultaneously.

In some illustrative embodiments, the availability status information of the reference signal is indicated with a bitmap, and a number of indication bits in the bitmap is the same as that of reference signal resource set groups configured in the system information.

In some illustrative embodiments, the availability status information is carried in a paging downlink control information (DCI) message, or a permanent equipment identifier (PEI) DCI message; and the system information or the change indication information of the system information is carried in a paging DCI message or a PEI DCI message.

In some illustrative embodiments, the first status includes an idle status or an inactive status.

According to a second aspect of the present invention, there is provided a method for indicating an availability of a reference signal, including: sending, by a network side, first indication information, the first indication information including availability status information of the reference signal.

In some illustrative embodiments, the availability status information includes availability or unavailability information of the reference signal.

In some illustrative embodiments, the availability status includes availability change information of the reference signal; and the availability change information includes a change of the reference signal from available to unavailable, or a change of the reference signal from unavailable to available.

In some illustrative embodiments, availability change information and system information or change indication information of system information are sent by the network side in a same message or different messages.

In some illustrative embodiments, the availability change information and the system information or the change indication information of the system information are sent by the network side via a paging DCI message and/or a PEI DCI message.

In some illustrative embodiments, the availability status information of the reference signal is indicated with a bitmap, and a number of indication bits in the bitmap is the same as that of reference signal resource set groups configured in the system information.

According to a third aspect of the present invention, there is provided an apparatus for indicating an availability of a reference signal, applied to a user equipment, including a receiving unit configured to receive first indication information sent by a network side in case that the user equipment is in a first status, the first indication information including availability status information of the reference signal.

In some illustrative embodiments, the availability status information includes availability or unavailability information of the reference signal.

In some illustrative embodiments, the availability status includes availability change information of the reference signal; and the availability change information includes a change of the reference signal from available to unavailable, or a change of the reference signal from unavailable to available.

In some illustrative embodiments, the apparatus further includes a monitoring unit; in which the receiving unit is further configured to receive system information or change indication information of system information sent by the network side, and acquiring configuration information of the reference signal based on the system information; and the monitoring unit is configured to monitor the reference signal changed according to a default availability status.

In some illustrative embodiments, the monitoring unit is further configured to determine at least one reference signal changed based on the configuration information of the reference signal; and confirm that an availability status of the at least one reference signal changed is unavailable.

In some illustrative embodiments, the apparatus further includes a determining unit configured to determine, as an availability status of the reference signal, an availability status before the configuration information of the reference signal is changed.

In some illustrative embodiments, the receiving unit is further configured to receive the first indication information, and system information or change indication information of system information simultaneously; and the monitoring unit is further configured to monitor the reference signal based on configuration information and the availability status information of the reference signal.

In some illustrative embodiments, the receiving unit is configured to receive the first indication information, and the system information or the change indication information of the system information in a same message; or receive the first indication information, and the system information or the change indication information of the system information in different messages.

In some illustrative embodiments, the receiving unit is configured to receive the system information or the change indication information of the system information and the availability status information in a same system message modification cycle; and determine that the system information or the change indication information of the system information and the availability status information are received simultaneously.

In some illustrative embodiments, the availability status information of the reference signal is indicated with a bitmap, and a number of indication bits in the bitmap is the same as that of reference signal resource set groups configured in the system information.

In some illustrative embodiments, the first status includes an idle status or an inactive status.

According to a fourth aspect of the present invention, there is provided an apparatus for indicating an availability of a reference signal, applied to a network element device, including a sending unit configured to send first indication information, the first indication information including availability status information of the reference signal.

In some illustrative embodiments, the availability status information includes availability or unavailability information of the reference signal.

In some illustrative embodiments, the availability status includes availability change information of the reference signal; and the availability change information includes a change of the reference signal from available to unavailable, or a change of the reference signal from unavailable to available.

In some illustrative embodiments, the sending unit is further configured to send availability change information and system information or change indication information of system information in a same message or different messages.

In some illustrative embodiments, the sending unit is further configured to send the availability change information and the system information or the change indication information of the system information via a paging DCI message and/or a PEI DCI message.

In some illustrative embodiments, the sending unit is further configured to indicate the availability status information of the reference signal with a bitmap, and a number of indication bits in the bitmap is the same as that of reference signal resource set groups configured in the system information.

According to a fifth aspect of the present invention, there is provided a user equipment, including a processor, a transceiver, a memory, and an executable program stored in the memory and runnable by the processor, in which the processor is configured to execute steps of the method for indicating the availability of the reference signal according to the first aspect when running the executable program.

According to a sixth aspect of the present invention, there is provided a network element device, including a processor, a transceiver, a memory, and an executable program stored in the memory and runnable by the processor, in which the processor is configured to execute steps of the method for indicating the availability of the reference signal according to the second aspect when running the executable program.

According to a seventh aspect of the present invention, there is provided a storage medium having stored therein an executable program that, when executed by a processor, causes steps of the method for indicating the availability of the reference signal according to the first aspect and the second aspect to be performed.

According to the technical solution of the embodiments of the present invention, a UE in a first status receives first indication information sent by a network side, and monitors a reference signal through availability status information of the reference signal contained in the first indication information to perform synchronization. That is, after the UE acquires the availability indication of the reference signal, if a system message changes, the system message can be acquired, and the availability status information returns to the default status; or the resource set part that has not changed in the reference signal continues to use the previous availability status in accordance with the layer one (Lay1) mode; or when updates of Lay1 and system message occur at the same time, the availability status of the reference signal is comprehensively determined according to the system message in combination with the Lay1 mode. In the embodiments of the present invention, even if the resource set of the reference signal is switched and the network side no longer sends an availability change indication for the resource set of the reference signal, the UE can still monitor the reference signal for the configuration change and availability status of the reference signal to achieve corresponding synchronization. In the embodiments of the present invention, it is possible to achieve effective supplementation of the use of availability information of the reference signal, such that the UE can access the network more conveniently.

### BRIEF DESCRIPTION OF THE DRAWINGS

The accompanying drawings, which are incorporated in this specification and constitute a part of this specification, illustrate embodiments consistent with the invention and, together with the specification, serve to explain the principles of embodiments of the invention.
FIG. 1 is a schematic diagram showing a wireless communication system according to an illustrative embodiment.
FIG. 2 is a schematic flow chart showing a method for indicating an availability of a reference signal according to an illustrative embodiment.
FIG. 3 is a schematic flow chart showing a method for indicating an availability of a reference signal according to an illustrative embodiment.
FIG. 4 is a schematic block diagram showing an apparatus for indicating an availability of a reference signal according to an illustrative embodiment.
FIG. 5 is a schematic block diagram showing an apparatus for indicating an availability of a reference signal according to an illustrative embodiment.
FIG. 6 is a schematic block diagram of a user equipment according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. Instead, they are merely examples of apparatuses and methods consistent with aspects related to embodiments of the present invention as recited in the appended claims.

Terms used herein in embodiments of the present invention are only for the purpose of describing specific embodiments, but should not be construed to limit the present invention. As used in the embodiments of the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if' may be construed to mean "when" or "upon" or "in response to determining" depending on the context.

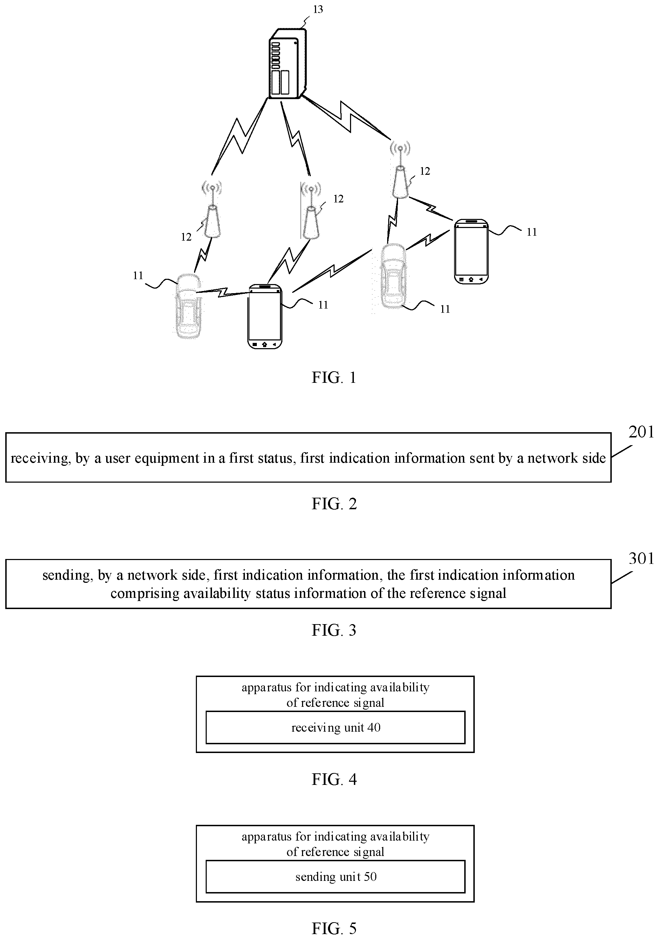

Referring to FIG. 1, which is a schematic diagram showing a wireless communication system provided by an embodiment of the present invention. As shown in FIG. 1, the wireless communication system is a communication system based on a cellular mobile communication technology, and may include several terminals 11 and several base stations 12.

The terminal 11 may be a device that provides voice and/or data connectivity to a user. The terminal 11 can communicate with one or more core networks via a radio access network (RAN). The terminal 11 can be an Internet of Things terminal, such as a sensor device, a mobile phone (or referred to as a "cellular" phone) and a computer with an Internet of Things terminal. For example, it can be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may be a device of an unmanned aerial vehicle. Alternatively, the terminal 11 may be a vehicle-mounted device, for example, a driving computer with a wireless communication function, or a wireless communication device externally connected with a driving computer. Alternatively, the terminal 11 may be a roadside device, such as a street lamp, a signal lamp or other roadside devices with a wireless communication function.

The base station 12 may be a network side device in the wireless communication system. The wireless communication system can be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be any generation system. The access network in the 5G system can be referred to as a new generation-radio access network (NG-RAN), or a MTC system.

The base station 12 may be an evolved base station (eNB) used in the 4G system. Alternatively, the base station 12 may be a base station adopting a centralized distributed architecture (gNB) used in the 5G system. When the base station 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 12 is not limited in the embodiments of the present invention.

A wireless connection can be established between the base station 12 and the terminal 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

In some embodiments, an end to end (E2E) connection may also be established between the terminals 11, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 13.

Executors involved in embodiments of the present invention include, but are not limited to, a user equipment (UE) in a cellular mobile communication system, a base station of the cellular mobile communication, etc.

FIG. 2 is a schematic flow chart showing a method for indicating an availability of a reference signal according to an illustrative embodiment. As shown in FIG. 2, the method for indicating the availability of the reference signal according to an embodiment of the present invention is applied to a UE side. The method for indicating the availability of the reference signal according to an embodiment of the present invention includes a processing step as follows.

In step 201, first indication information sent by a network side is received by a user equipment in a first status.

In an embodiment of the present invention, the first indication information includes availability status information of the reference signal. The availability status information includes availability or unavailability information of the reference signal. Specifically, the availability status includes availability change information of the reference signal; and the availability change information includes a change of the reference signal from available to unavailable, or a change of the reference signal from unavailable to available.

The reference signal includes a TRS, a CSI-RS, or the like. The first status includes an idle status, an inactive status or the like, i.e. the UE is still in a non-connected status.

In an embodiment of the present invention, when system information or change indication information of system information sent by the network side is received by the user equipment, configuration information of the reference signal is acquired based on the system information; and the changed reference signal is monitored according to a default availability status. Here, although the network side is configured with an indication mechanism of the availability status information of the reference signal, when the user equipment receives system information or change indication information of system information sent by the network side, but does not acquire the availability status information of the reference signal, then the changed reference signal is monitored according to a default availability status. As a preferred embodiment, the default availability status is unavailable. Specifically, the user equipment determines at least one reference signal changed based on the configuration information of the reference signal, and confirms that an availability status of the at least one reference signal changed is unavailable. That is, in case that the availability status information of the reference signal is not indicated, the availability status of the reference signal is defaulted to be unavailable.

In some illustrative embodiments of the present invention, system information or change indication information of system information sent by the network side is received by the user equipment, configuration information of the reference signal is acquired based on the system information; and an availability status before the configuration information of the reference signal is changed is determined as an availability status of the reference signal. That is, when configuration information of a reference signal such as a TRS/CSI-RS resource set group has not changed, that is, there is no addition/modification/deletion of a TRS/CSI-RS resource set in the TRS/CSI-RS resource set group, the availability status of the TRS/CSI-RS is processed according to the system information block (SIB) message before changed, that is, it continues to be used, that is, the validity duration sent by the network continues to be valid. If configuration information of a TRS/CSI-RS resource set group is changed, and there is an addition/modification/deletion of a TRS/CSI-RS resource set in the TRS/CSI-RS resource set group, then the availability status of the reference signal is processed according to the SIB message after changed, that is, it is processed according to the default availability status. For example, the process is performed by entering an initially unavailable state. That is, the validity duration sent by the network will become invalid.

In some illustrative embodiments of the present invention, the first indication information, and system information or change indication information of system information are received by the user equipment simultaneously; and the reference signal may be monitored based on configuration information and default availability status information of the reference signal. That is, when not only is system information or change indication information of system information received, but also the availability status information of the reference signal is received, the UE will obtain an updated system message at a system message update boundary, and its resource availability will be processed according to the default availability status, that is, it will be processed as unavailable.

In some illustrative embodiments of the present invention, the first indication information, and system information or change indication information of system information are received by the user equipment simultaneously; and the reference signal is monitored based on configuration information and the availability status information of the reference signal. That is, when not only is system information or change indication information of system information received, but also the availability status information of the reference signal is received, the monitoring mode of the reference signal is determined comprehensively by combining the two kinds of information. For example, the currently received availability status information of the reference signal may be used as the availability indication of the reference signal. Alternatively, when the availability indication of the reference signal is unavailable and the configuration information of the reference signal indicates that the reference signal is changed, it is determined that the changed reference signal is available. At this time, the valid reference point or valid starting time of the validity duration of the availability of the reference signal can be calculated from the updated boundary of the system message.

In some illustrative embodiments of the present invention, for receiving both system information or change indication information of system information and the availability status information of the reference signal, the UE may receive both the system information or the change indication information of the system information and the availability status information of the reference signal in the same message, such as paging DCI; or the UE may receive the first indication information and the system information or the change indication information of the system information through different messages in the same system message modification cycle. Specifically, the UE receives the system information or the change indication information of the system information, and the availability status information within the same system message modification cycle, and determines that the system information or the change indication information of the system information and the availability status information are received simultaneously.

In some illustrative embodiments of the present invention, the availability status information of the reference signal is indicated by means of a bitmap, and the number of indication bits in the bitmap is the same as the number of reference signal resource set groups configured in the system information.

In some illustrative embodiments, the availability status information is carried in a paging downlink control information (DCI) message or a permanent equipment identifier (PEI) DCI message; and the system information or the change indication information of the system information is carried in a paging DCI message or a PEI DCI message.

The technical solution of the embodiments of the present invention is applicable to UEs in an idle/inactive status; in which the availability indication includes TRS/CSI-RS available or unavailable information; the availability indication also includes TRS/CSI-RS availability changes, such as from available to unavailable or from unavailable to available.

If the UE receives a SIB message carrying TRS/CSI-RS configuration information or a change indication of TRS/CSI-RS configuration information, the UE determines the availability of a TRS/CSI-RS resource according to the acquired TRS/CSI-RS configuration information in modes as follows:
Mode 1: The availability status is processed according to the default status, that is, the TRS/CSI-RS resource is considered to be unavailable. When the UE wakes up from sleep, the monitoring will fall back to SSB synchronization until the next TRS/CSI-RS availability indication sent by the network is received.

As an example, if the UE has N TRS/CSI-RS resource set groups before receiving a system message change notification, the availability status is indicated by N bits indicated by the bitmap. The UE obtains new TRS/CSI-RS configuration information, such as M TRS/CSI-RS resource set groups (M may be greater than, equal to or less than N), then it is considered that the availability status of the M TRS/CSI-RS resource set groups is unavailable. At this time, the original timer used for the validity duration will be deleted.

M is greater than N, which means that a new TRS/CSI-RS is added to the TRS/CSI-RS resource set group.

Mode 2: The previous availability status after the system message is updated continues to be used as the availability status; and the validity duration for the scenario where it continues to be used is not affected.

As an example: if configuration information of a TRS/CSI-RS resource set group has not changed, that is, there is no addition/modification/deletion of a TRS/CSI-RS resource set in the TRS/CSI-RS resource set group, then its availability status is processed according to the SIB message before changed, that is, the previous availability status information of the reference signal continues to be used.

As another example: if configuration information of a TRS/CSI-RS resource set group is changed, that is, there is an addition/modification/deletion of a TRS/CSI-RS resource set in the TRS/CSI-RS resource set group, the availability status of the reference signal is processed according to the SIB message before changed, that is, the previous availability status information of the reference signal continues to be used. Here, as long as the Group ID is not changed and is the same as the previous Group ID of the reference signal, the previous availability status information of the reference signal can continue to be used.

In case that the previous availability status information of the reference signal continues to be used, the validity timer of the availability status information is not affected.

For example, if Group0 is not changed, Group 1 is changed, Group2 is deleted, and Group3 is newly added; then for GroupO, the previous availability status continues to be used as the availability status of the reference signal; and the validity status of Group 1 and Group3 is initially invalid, waiting for subsequent activation.

In an embodiment of the present invention, if the UE receives a change indication of a SIB message carrying TRS/CSI-RS configuration information, and the UE also receives an availability indication of a TRS/CSI-RS resource at the same time, they are processed in the manner as follows:
The change indication of the SIB message and the availability indication of the TRS/CSI-RS resource may be notified to the UE in the same message: for example, the change indication of the SIB message and the availability indication of the TRS/CSI-RS resource are received in the same paging DCI. Alternatively, the change indication of the SIB message and the availability indication of the TRS/CSI-RS resource may not be notified to the UE in the same message: for example, the UE receives the change indication of the SIB message in one piece of paging DCI and receives the availability indication of the TRS/CSI-RS resource in another piece of DCI. Alternatively, the change indication of the SIB message and the availability indication of the TRS/CSI-RS resource may not be notified to the UE in the same message: for example, the change indication of the SIB message is received in one piece of paging DCI, and the availability indication of the TRS/CSI-RS resource is received in another piece of PEI DCI.

In an embodiment of the present invention, the change indication of the SIB message and the availability indication of the TRS/CSI-RS resource are issued within the same system message modification cycle, and can be considered to be received at the same time.

At this time, the UE can obtain the availability indication from the system message for indicating the configuration of resources and from the availability indication of the TRS/CSI-RS resource at the same time. That is, the availability of the reference signal is jointly determined by combining the information in the SIB and the Lay1 indication. For example, in case that the availability indication of the reference signal is unavailable, and the configuration information of the reference signal indicates that the reference signal is changed, it is determined that the changed reference signal is available. For example, in case that the availability indication of the reference signal is available, and the configuration information of the reference signal indicates that the reference signal is deleted, it is determined that the changed reference signal is unavailable.

At this time, the valid time point will be based on the updated boundary of the system message as the starting point.

In an embodiment of the present invention, the number of bits in the bitmap in the availability indication of the TRS/CSI-RS resource is consistent with the number of TRS/CSI-RS resource set groups configured in the system message. For example, if the TRS/CSI-RS resource set groups are configured as 2 groups, 2 bits are required for the availability indication.

In an embodiment of the present invention, after the UE acquires the availability status indication of the reference signal, if a system message changes, the UE returns to the default status after acquiring the system message; or the resource set part of the reference signal that has not changed continues to use the previous availability status in the Lay1 mode; or in case that updates of Lay1 and the system message occur at the same time, the availability status of the reference signal is comprehensively determined in accordance with the system message and the Lay1 mode.

FIG. 3 is a schematic flow chart showing a method for indicating an availability of a reference signal according to an illustrative embodiment. As shown in FIG. 3, the method for indicating the availability of the reference signal according to an embodiment of the present invention is applied to a network side. The method for indicating the availability of the reference signal according to an embodiment of the present invention includes a processing step as follows.

In step 301, the network side sends first indication information, in which the first indication information includes availability status information of a reference signal.

In an embodiment of the present invention, the first indication information includes availability status information of the reference signal. The availability status information includes availability or unavailability information of the reference signal. Specifically, the availability status includes availability change information of the reference signal; and the availability change information includes a change of the reference signal from available to unavailable, or a change of the reference signal from unavailable to available.

The reference signal includes a TRS, a CSI-RS, or the like. The network side includes network element devices such as base stations or relay stations. The UE that receives the availability change information of the reference signal refers to a UE in an idle/inactive status.

In some illustrative embodiments of the present invention, the network side sends the availability change information and system information or change indication information of system information through a paging DCI message and/or a PEI DCI message.

The change indication of the SIB message and the availability indication of the TRS/CSI-RS resource may be sent in the same message: for example, the change indication of the SIB message and the availability indication of the TRS/CSI-RS resource are carried in the same paging DCI. Alternatively, the change indication of the SIB message and the availability indication of the TRS/CSI-RS resource may not be carried in the same message: for example, the change indication of the SIB message is carried in one piece of paging DCI, and the availability indication of the TRS/CSI-RS resource is carried in another piece of DCI.

Alternatively, the change indication of the SIB message and the availability indication of the TRS/CSI-RS resource may not be carried in the same message: for example, the change indication of the SIB message is carried in one piece of paging DCI, and the availability indication of the TRS/CSI-RS resource is carried in another piece of PEI DCI.

In some illustrative embodiments of the present invention, the availability status information of the reference signal is indicated by means of a bitmap, and the number of indication bits in the bitmap is the same as the number of reference signal resource set groups configured in the system message. For example, if the TRS/CSI-RS resource set groups are configured as 2 groups, 2 bits are required for the availability indication.

FIG. 4 is a schematic block diagram showing an apparatus for indicating an availability of a reference signal according to an illustrative embodiment. As shown in FIG. 4, the apparatus for indicating the availability of the reference signal according to an embodiment of the present invention is applied to a UE, and specifically includes a receiving unit 40 configured to receive first indication information sent by a network side in case that the user equipment is in a first status, the first indication information including availability status information of the reference signal.

In some illustrative embodiments, the availability status information includes availability or unavailability information of the reference signal.

In some illustrative embodiments, the availability status includes availability change information of the reference signal; and the availability change information includes a change of the reference signal from available to unavailable, or a change of the reference signal from unavailable to available.

In some illustrative embodiments, on the basis of the apparatus for indicating the availability of the reference signal shown in FIG. 4, the apparatus for indicating the availability of the reference signal according to an embodiment of the present invention further includes a monitoring unit (not shown in FIG. 4); the receiving unit 40 is further configured to receive system information or change indication information of system information sent by the network side, and acquire configuration information of the reference signal based on the system information; and the monitoring unit is configured to monitor the reference signal changed according to a default availability status.

In some illustrative embodiments, the monitoring unit is further configured to determine at least one reference signal changed based on the configuration information of the reference signal; and confirm that an availability status of the at least one reference signal changed is unavailable.

In some illustrative embodiments, on the basis of the apparatus for indicating the availability of the reference signal shown in FIG. 4, the apparatus for indicating the availability of the reference signal according to an embodiment of the present invention further includes a determining unit (not shown in FIG. 4) configured to determine, as an availability status of the reference signal, an availability status before the configuration information of the reference signal is changed.

In some illustrative embodiments, the receiving unit 40 is further configured to receive the first indication information, and system information or change indication information of system information simultaneously; and the monitoring unit is further configured to monitor the reference signal based on configuration information and the availability status information of the reference signal.

In some illustrative embodiments, the receiving unit 40 is configured to receive the first indication information, and the system information or the change indication information of the system information in a same message; or receive the first indication information, and the system information or the change indication information of the system information in different messages.

In some illustrative embodiments, the receiving unit 40 is configured to receive the system information or the change indication information of the system information and the availability status information in a same system message modification cycle; and determine that the system information or the change indication information of the system information and the availability status information are received simultaneously.

In some illustrative embodiments, the availability status information of the reference signal is indicated with a bitmap, and a number of indication bits in the bitmap is the same as that of reference signal resource set groups configured in the system information.

In some illustrative embodiments, the first status includes an idle status or an inactive status.

In an illustrative embodiment, the receiving unit 40, the monitoring unit, the determining unit, or the like may be implemented by one or more central processing units (CPUs), graphics processing units (GPUs), baseband processors (BPs), application specific integrated circuits (ASICs), digital signal processors (DSPs), programmable logic devices (PLDs), complex programmable logic devices (CPLDs), field programmable gate arrays (FPGAs), general-purpose processors, controllers, microcontroller units (MCUs), microprocessors, or other electronic components, and may also be implemented in combination with one or more radio frequency (RF) antennas to execute the steps of the method for indicating the availability of the reference signal in the aforementioned embodiments.

In an embodiment of the present invention, the specific manner in which each unit in the apparatus for indicating the availability of the reference signal shown in FIG. 4 performs operations has been described in detail in connection with the embodiments of the method, and will not be elaborated here.

FIG. 5 is a schematic block diagram showing an apparatus for indicating an availability of a reference signal according to an illustrative embodiment. As shown in FIG. 5, the apparatus for indicating the availability of the reference signal according to an embodiment of the present invention is applied to a network element device, and specifically includes a sending unit 50 configured to send first indication information, the first indication information including availability status information of the reference signal.

In an embodiment of the present invention, the network element device includes a base station, a relay station or the like.

In some illustrative embodiments, the availability status information includes availability or unavailability information of the reference signal.

In some illustrative embodiments, the availability status includes availability change information of the reference signal; and the availability change information includes a change of the reference signal from available to unavailable, or a change of the reference signal from unavailable to available.

In some illustrative embodiments, the sending unit 50 is further configured to send availability change information and system information or change indication information of system information in a same message or different messages.

In some illustrative embodiments, the sending unit 50 is further configured to send the availability change information and the system information or the change indication information of the system information via a paging DCI message and/or a PEI DCI message.

In some illustrative embodiments, the sending unit 50 is further configured to indicate the availability status information of the reference signal with a bitmap, and a number of indication bits in the bitmap is the same as that of reference signal resource set groups configured in the system information.

In an illustrative embodiment, the sending unit 50, the monitoring unit, the determining unit, or the like may be implemented by one or more central processing units (CPUs), graphics processing units (GPUs), baseband processors (BPs), application specific integrated circuits (ASICs), digital signal processors (DSPs), programmable logic devices (PLDs), complex programmable logic devices (CPLDs), field programmable gate arrays (FPGAs), general-purpose processors, controllers, microcontroller units (MCUs), microprocessors, or other electronic components, and may also be implemented in combination with one or more radio frequency (RF) antennas to execute the steps of the method for indicating the availability of the reference signal in the aforementioned embodiments.

In an embodiment of the present invention, the specific manner in which each unit in the apparatus for indicating the availability of the reference signal shown in FIG. 5 performs operations has been described in detail in connection with the embodiments of the method, and will not be elaborated here.

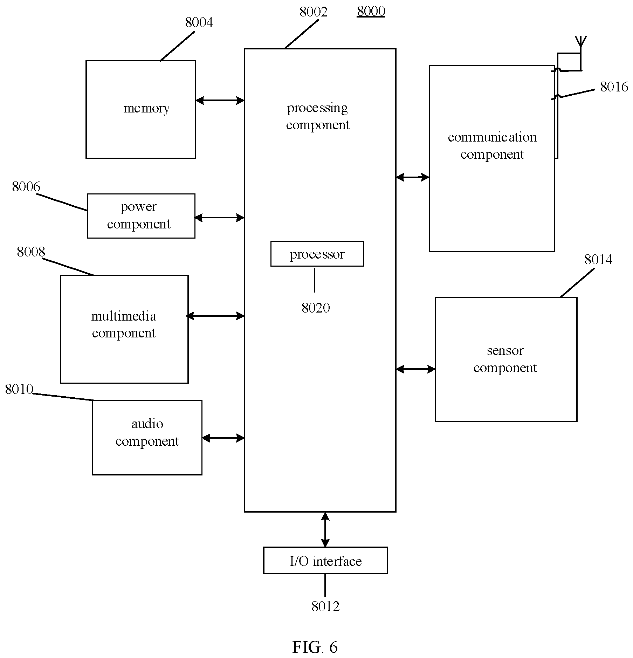

FIG. 6 is a block diagram showing a user equipment 8000 according to an illustrative embodiment. For example, the user equipment 8000 can be a mobile phone, a computer, a digital broadcast terminal, a messaging device, a game console, a tablet device, a medical device, a fitness device, a personal digital assistant, or the like.

Referring to FIG. 6, the user equipment 8000 may include one or more of the following components: a processing component 8002, a memory 8004, a power component 8006, a multimedia component 8008, an audio component 8010, an input/output (I/O) interface 8012, a sensor component 8014, and a communication component 8016.

The processing component 8002 typically controls overall operations of the user equipment 8000, such as the operations associated with display, phone calls, data communications, camera operations, and recording operations. The processing component 8002 can include one or more processors 8020 to execute instructions to perform all or some of the steps in the above-described methods. Moreover, the processing component 8002 may include one or more modules which facilitate the interaction between the processing component 8002 and other components. For instance, the processing component 8002 may include a multimedia module to facilitate the interaction between the multimedia component 8008 and the processing component 8002.

The memory 8004 is configured to store various types of data to support the operation of the user equipment 8000. Examples of such data include instructions for any applications or methods operated on the user equipment 8000, contact data, phonebook data, messages, pictures, videos, etc. The memory 8004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 8006 provides power to various components of the user equipment 8000. The power component 8006 may include a power management system, one or more power sources, and other components associated with the generation, management, and distribution of power in the user equipment 8000.

The multimedia component 8008 includes a screen providing an output interface between the user equipment 8000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a time duration and a pressure associated with the touch or swipe action. In some embodiments, the multimedia component 8008 includes a front camera and/or a rear camera. The front camera and/or the rear camera may receive an external multimedia datum while the user equipment 8000 is in an operation mode, such as a photographing mode or a video mode. Each of the front camera and the rear camera may be a fixed optical lens system or have focus and optical zoom capability.

The audio component 8010 is configured to output and/or input audio signals. For example, the audio component 8010 includes a microphone (MIC) configured to receive an external audio signal when the user equipment 8000 is in an operation mode, such as a call mode, a recording mode, and a voice recognition mode. The received audio signal may be further stored in the memory 8004 or transmitted via the communication component 8016. In some embodiments, the audio component 8010 further includes a speaker to output audio signals.

The I/O interface 8012 provides an interface between the processing component 8002 and peripheral interface modules, such as keyboards, click wheels, buttons, and the like. The buttons may include, but are not limited to, a home button, a volume button, a starting button, and a locking button.

The sensor component 8014 includes one or more sensors to provide status assessments of various aspects of the user equipment 8000. For instance, the sensor component 8014 may detect an open/closed status of the user equipment 8000, relative positioning of components, e.g., the display and the keypad, of the user equipment 8000, a change in position of the user equipment 8000 or a component of the user equipment 8000, a presence or absence of user contact with the user equipment 8000, an orientation or an acceleration/deceleration of the user equipment 8000, and a change in temperature of the user equipment 8000. The sensor component 8014 may include a proximity sensor configured to detect the presence of nearby objects without any physical contact. The sensor component 8014 may further include a light sensor, such as a CMOS or CCD image sensor, for use in imaging applications. In some embodiments, the sensor component 8014 may further include an accelerometer sensor, a gyroscope sensor, a magnetic sensor, a pressure sensor, or a temperature sensor.

The communication component 8016 is configured to facilitate communication, wired or wireless, between the user equipment 8000 and other devices. The user equipment 8000 can access a wireless network based on a communication standard, such as Wi-Fi, 2G, or 3G, or a combination thereof. In an illustrative embodiment, the communication component 8016 receives a broadcast signal or broadcast associated information from an external broadcast management system via a broadcast channel. In an illustrative embodiment, the communication component 8016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the user equipment 8000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing steps of the method for indicating the availability of the reference signal in the above-mentioned embodiments.

In an illustrative embodiment, there is also provided a non-transitory computer readable storage medium including instructions, such as included in the memory 8004, executable by the processor 8020 in the user equipment 8000, for completing steps of the above-mentioned method for indicating the availability of the reference signal. For example, the non-transitory computer-readable storage medium may be a ROM, a random access memory (RAM), a CD-ROM, a magnetic tape, a floppy disc, an optical data storage device, and the like.

In an embodiment of the present invention, there is also described a user equipment, which includes a processor, a transceiver, a memory and an executable program stored in the memory and capable of being run by the processor, in which the processor is configured to execute steps of the method for indicating the availability of the reference signal on the UE side in the above-mentioned embodiments when running the executable program.

In an embodiment of the present invention, there is also described a network element device, which includes a processor, a transceiver, a memory and an executable program stored in the memory and capable of being run by the processor, in which the processor is configured to execute steps of the method for indicating the availability of the reference signal in the above-mentioned embodiments when running the executable program.

In an embodiment of the present invention, there is also described a storage medium having stored therein an executable program that, when executed by a processor, causes steps of the method for indicating the availability of the reference signal in the above-mentioned embodiments to be performed.

Other embodiments of the present invention will be apparent to those skilled in the art from consideration of the specification and practice of the present invention disclosed here. The present invention is intended to cover any variations, uses, or adaptations of the present invention following the general principles of embodiments of the present invention and including such departures from embodiments of the present invention as come within known or customary practice in the art. It is intended that the specification and examples be considered as illustrative only, with a true scope and spirit of the present invention being indicated by the following claims.

It will be appreciated that embodiments of the present invention are not limited to the exact construction that has been described above and illustrated in the accompanying drawings, and that various modifications and changes can be made without departing from the scope thereof. It is intended that the scope of embodiments of the present invention only be limited by the appended claims.

## Claims

1. A method for indicating an availability of a reference signal, comprising:
receiving, by a user equipment in a first status, first indication information sent by a network side, the first indication information comprising availability status information of the reference signal.

2. The method of claim 1, wherein the availability status information comprises availability or unavailability information of the reference signal.

3. The method of claim 1, wherein the availability status comprises availability change information of the reference signal;
the availability change information comprises a change of the reference signal from available to unavailable, or a change of the reference signal from unavailable to available.

4. The method of claim 1, further comprising:
receiving, by the user equipment, system information or change indication information of system information sent by the network side, and acquiring configuration information of the reference signal based on the system information;
monitoring the reference signal changed according to a default availability status.

5. The method of claim 4, wherein monitoring the reference signal changed according to the default availability status comprises:
determining, by the user equipment, at least one reference signal changed based on the configuration information of the reference signal;
confirming, by the user equipment, that an availability status of the at least one reference signal changed is unavailable.

6. The method of claim 1, further comprising:
receiving, by the user equipment, system information or change indication information of system information sent by the network side, and acquiring configuration information of the reference signal based on the system information;
determining, as an availability status of the reference signal, an availability status before the configuration information of the reference signal is changed.

7. The method of claim 1, further comprising:
receiving, by the user equipment, the first indication information, and system information or change indication information of system information simultaneously;
monitoring the reference signal based on configuration information and the availability status information of the reference signal.

8. The method of claim 7, wherein
the first indication information, and the system information or the change indication information of the system information are received by the user equipment in a same message; or
the first indication information, and the system information or the change indication information of the system information are received by the user equipment in different messages.

9. The method of claim 7, wherein
the system information or the change indication information of the system information and the availability status information are received by the user equipment in a same system message modification cycle;
it is determined that the system information or the change indication information of the system information and the availability status information are received simultaneously.

10. The method of claim 1, wherein the availability status information of the reference signal is indicated with a bitmap, and a number of indication bits in the bitmap is the same as that of reference signal resource set groups configured in the system information.

11. The method of any one of claims 4 to 10, wherein
the availability status information is carried in a paging downlink control information DCI message, or a permanent equipment identifier PEI DCI message;
the system information or the change indication information of the system information is carried in a paging DCI message or a PEI DCI message.

12. The method of any one of claims 1 to 10, wherein the first status comprises an idle status or an inactive status.

13. A method for indicating an availability of a reference signal, comprising:
sending, by a network side, first indication information, the first indication information comprising availability status information of the reference signal.

14. The method of claim 13, wherein the availability status information comprises availability or unavailability information of the reference signal.

15. The method of claim 13, wherein the availability status comprises availability change information of the reference signal;
the availability change information comprises a change of the reference signal from available to unavailable, or a change of the reference signal from unavailable to available.

16. The method of claim 13, wherein availability change information and system information or change indication information of system information are sent by the network side in a same message or different messages.

17. The method of claim 16, wherein the availability change information and the system information or the change indication information of the system information are sent by the network side via a paging DCI message and/or a PEI DCI message.

18. The method of claim 13, wherein the availability status information of the reference signal is indicated with a bitmap, and a number of indication bits in the bitmap is the same as that of reference signal resource set groups configured in the system information.

19. An apparatus for indicating an availability of a reference signal, applied to a user equipment, comprising:
a receiving unit configured to receive first indication information sent by a network side in case that the user equipment is in a first status, the first indication information comprising availability status information of the reference signal.

20. The apparatus of claim 19, wherein the availability status information comprises availability or unavailability information of the reference signal.

21. The apparatus of claim 19, wherein the availability status comprises availability change information of the reference signal;
the availability change information comprises a change of the reference signal from available to unavailable, or a change of the reference signal from unavailable to available.

22. The apparatus of claim 19, further comprising a monitoring unit;
wherein the receiving unit is further configured to receive system information or change indication information of system information sent by the network side, and acquire configuration information of the reference signal based on the system information;
the monitoring unit is configured to monitor the reference signal changed according to a default availability status.

23. The apparatus of claim 22, wherein the monitoring unit is further configured to:
determine at least one reference signal changed based on the configuration information of the reference signal;
confirm that an availability status of the at least one reference signal changed is unavailable.

24. The apparatus of claim 22, further comprising:
a determining unit configured to determine, as an availability status of the reference signal, an availability status before the configuration information of the reference signal is changed.

25. The apparatus of claim 19, wherein
the receiving unit is further configured to receive the first indication information, and system information or change indication information of system information simultaneously;
the monitoring unit is further configured to monitor the reference signal based on configuration information and the availability status information of the reference signal.

26. The apparatus of claim 25, wherein the receiving unit is configured to:
receive the first indication information, and the system information or the change indication information of the system information in a same message; or
receive the first indication information, and the system information or the change indication information of the system information in different messages.

27. The apparatus of claim 25, wherein the receiving unit is configured to:
receive the system information or the change indication information of the system information and the availability status information in a same system message modification cycle;
determine that the system information or the change indication information of the system information and the availability status information are received simultaneously.

28. The apparatus of claim 19, wherein the availability status information of the reference signal is indicated with a bitmap, and a number of indication bits in the bitmap is the same as that of reference signal resource set groups configured in the system information.

29. The apparatus of any one of claims 19 to 28, wherein the first status comprises an idle status or an inactive status.

30. An apparatus for indicating an availability of a reference signal, applied to a network element device, comprising:
a sending unit configured to send first indication information, the first indication information comprising availability status information of the reference signal.

31. The apparatus of claim 30, wherein the availability status information comprises availability or unavailability information of the reference signal.

32. The apparatus of claim 30, wherein the availability status comprises availability change information of the reference signal;
the availability change information comprises a change of the reference signal from available to unavailable, or a change of the reference signal from unavailable to available.

33. The apparatus of claim 30, wherein the sending unit is further configured to send availability change information and system information or change indication information of system information in a same message or different messages.

34. The apparatus of claim 33, wherein the sending unit is further configured to send the availability change information and the system information or the change indication information of the system information via a paging DCI message and/or a PEI DCI message.

35. The apparatus of claim 30, wherein the sending unit is further configured to indicate the availability status information of the reference signal with a bitmap, and a number of indication bits in the bitmap is the same as that of reference signal resource set groups configured in the system information.

36. A user equipment, comprising:
a processor;
a transceiver;
a memory; and
an executable program stored in the memory and runnable by the processor,
wherein the processor is configured to execute steps of the method for indicating the availability of the reference signal of any one of claims 1 to 12 when running the executable program.

37. A network element device, comprising:
a processor;
a transceiver;
a memory; and
an executable program stored in the memory and runnable by the processor,
wherein the processor is configured to execute steps of the method for indicating the availability of the reference signal of any one of claims 13 to 18 when running the executable program.

38. A storage medium having stored therein an executable program that, when executed by a processor, causes steps of the method for indicating the availability of the reference signal of any one of claims 1 to 18 to be performed.
